Europäisches Patentamt

European Patent Office

Office européen des brevets

(11) Veröffentlichungsnummer: **0 327 715 B1**

(12) **EUROPÄISCHE PATENTSCHRIFT**

(45) Veröffentlichungstag der Patentschrift: **02.12.92**

(51) Int. Cl.5: **B01D  29/00**, B01D 35/00

(21) Anmeldenummer: **88121263.3**

(22) Anmeldetag: **19.12.88**

(54) **Einmalfilter.**

(30) Priorität: **12.02.88 DE 3804429**

(43) Veröffentlichungstag der Anmeldung:
**16.08.89 Patentblatt  89/33**

(45) Bekanntmachung des Hinweises auf die
Patenterteilung:
**02.12.92 Patentblatt  92/49**

(84) Benannte Vertragsstaaten:
**CH DE ES FR GB IT LI NL**

(56) Entgegenhaltungen:
**DE-A- 3 417 248
FR-A- 2 185 016
GB-A- 1 490 362
US-A- 4 159 954
US-A- 4 167 875**

(73) Patentinhaber: **Schleicher & Schuell GmbH
Grimsehlstrasse 23
W-3352 Einbeck(DE)**

(72) Erfinder: **Cosack, Klaus
Schubertstrasse 12
W-3334 Dassel(DE)**

(74) Vertreter: **Jaeger, Klaus, Dipl.-Chem. Dr. et al
Jaeger, Steffens & Köster Patentanwälte
Pippinplatz 4a
W-8035 München-Gauting(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Einmalfilter und ein Verfahren zu dessen Herstellung
Einmalfilter sind bekannt und werden auf den verschiedensten Gebieten eingesetzt. Sie finden beispielsweise in der medizinischen und pharmazeutischen Praxis, zu Umweltschutzzwecken und im Laboratoriumsbetrieb Anwendung und können sowohl bei der Druckfiltration als auch bei der einfachen Schwerkraftfiltration eingesetzt werden. Sie werden meist dann herangezogen, wenn relativ kleine Fluidmengen zu filtrieren sind. Diese Einmalfilter werden zusammen mit dem darin eingesetzten eigentlichen Filter, also dem Filtermaterial, nur zum einmaligen Gebrauch verwendet.

Diese Einmalfilter sind Artikel der Massenproduktion. Sie bestehen gebräuchlicherweise aus Kunststoff. Das Filter eines solchen Einmalfilters ist üblicherweise eine Membran oder ein Filterpapier. Das Filter kann einschichtig oder mehrschichtig ausgebildet sein.

Zur Herstellung eines derartigen Einmalfilters wird das eigentliche Filter zwischen einem Gehäuseoberteil, beispielsweise einem Aufgabeelement, und dem Gehäuseunterteil, beispielsweise einem Filterhalterelement, eingespannt.

Bei der Montage der bekannten Einmalfilter wird zunächst das bereits auf die richtige Größe und Abmessungen zurechtgeschnittene Filter in das Gehäuseunterteil eingelegt. Anschließend daran wird das Gehäuseoberteil in das Gehäuseunterteil eingesetzt und durch geeignete Maßnahmen damit gas- und flüssigkeitsdicht verbunden.

Das Gehäuseoberteil und das Gehäuseunterteil bestehen bei dem gebräuchlichen Stand der Technik gewöhnlich aus einem thermoplastischen Kunststoff.

Nachteilig an diesen bekannten Einmalfiltern ist die Tatsache, daß das eigentliche Filter bzw. die Membran bereits vor dem Einsetzen auf die passende Größe zugeschnitten sein muß. Dies erfordert einen erheblichen Arbeitsaufwand.

Bei den hier in Rede stehenden kleinen Einmalfiltern mit nur geringen zu filtrierenden Fluidvolumina besteht zusätzlich das Problem, daß die notwendigerweise kleinen Filterstücke mit einem Durchmesser von beispielsweise 3 mm nur sehr schwierig bei der Montage der Einmalfilter zu handhaben sind. So können sie leicht durch schon geringe Luftbewegungen wegbewegt werden oder beim Einsetzen verrutschen bzw. in eine falsche Position geschoben werden.

Aus der GB-A-1 490 362 ist eine Filtervorrichtung bekannt, die ein Aufgabeelement für eine zu behandelnde Flüssigkeit und ein Aufnahmeelement für die behandelte Flüssigkeit besitzt. Beim Zusammenfügen dieser beiden Elemente wird aus einem dazwischengelegten Filterelement ein Filter passender Größe durch Zusammenwirken der beiden Elemente ausgeschnitten und nach deren endgültigen Zusammenfügens zwischen diesen beiden eingespannt, so daß eine Flüssigkeit mit Hilfe dieses Filters behandelt, beispielsweise filtriert werden kann.

Aus der DE-A 34 17 248 ist eine Vorrichtung zum Abscheiden von Feststoffen aus Flüssigkeiten bekannt. Diese Vorrichtung besteht aus axial durchflossenen, übereinander angeordneten und miteinander zusammengefügten Siebscheiben, deren jeweils von einem ringförmigen Rahmen eingefaßtes, aus einem thermoplastischen Kunststoff bestehendes Siebgewebe quer zur Einströmrichtung angeordnet ist. Die jeweils zwei benachbarten, formgleichen Siebscheiben sind ineinandergesteckt und miteinander mit Hilfe einer Verriegelungswulst/-nut formschlüssig verbunden.

Aufgabe der vorliegenden Erfindung ist es, einen einfachen und leicht zusammensetzbaren Einmalfilter sowie ein leicht zu praktizierendes und wirtschaftliches Verfahren zu dessen Herstellung bereitzustellen.

Gelöst wird diese Aufgabe durch die Lehren des Anspruchs 1 bzw. des Anspruchs 7.

Der erfindungsgemäße Einmalfilterhalter besitzt somit ein Aufgabeelement, das in einen Haltenapf im Filterhalterelement eingesetzt ist. Das Aufgabeelement kann ein Röhrchen oder eine nutschenartige Hülse sein. In den Aufgabekanal in diesem Röhrchen bzw. in den Hohlraum in dieser Nutsche wird die zu filtrierende Flüssigkeit eingefüllt.

Zwischen dem Boden des Haltenapfes des Filterhalterelements und dem eingesetzten Ende des Aufgabeelements ist das eigentliche Filter eingespannt. Die zu filtrierende Flüssigkeit gelangt vom Aufgabekanal durch das Filter in einen in den Boden des Filterhalterelements mündenden Auslaßkanal, der sich in einem Auslaßstutzen fortsetzt, durch den das Filtrat abgeführt wird.

Der Rand des Filterhalterelements am Eingang zum Haltenapf stellt eine Schneidkante dar, die mit einer Schneidkante zusammenwirkt, welche am filterhalterelementseitigen Ende des Aufgabeelements an dessen radialem äußeren Rand ausgebildet ist.

So können beispielsweise der genannte Rand am Eingang des Haltenapfes und der genannte Rand am Aufgabeelement die beide auch als Ecke bezeichnet werden können, rechtwinkelig sein. Die Abmessungen des Haltenapfes und des eingesetzten Endes des Aufgabeelements sind dabei derart bemessen, daß die Schneidkante bzw. Ecke des Aufgabeelements bei der Annäherung an den Haltenapf der genannten Ecke am Eingang des Haltenapfes möglichst nahekommt, jedoch in den Haltenapf einführbar ist. Beim Aneinandervorbeiführen dieser beiden Ecken wirken diese als Schneidkanten. Wird der Haltenapf im Filterhalterelement bei der Montage mit einem Filterblatt abgedeckt, das größer ist als der Haltenapf, dann wird durch das Einführen des Aufgabeelements in den genannten Haltenapf durch Zusammenwirken der beiden oben beschriebenen Schneidkanten ein Filter des gewünschten Zuschnitts aus dem Filterblatt bzw. Filterbogen ausgeschnitten. Dieser Filterzuschnitt fällt auf den Boden des Haltenapfes und wird durch das Aufgabeelement dort fixiert, sobald letzteres in seine Endstellung gebracht worden ist.

Der Haltenapf im Filterhalterelement und das in diesen Haltenapf eingesetzte Ende des Aufgabeelementes sind vorzugsweise zylindrisch und derart bemessen, daß die Außenwand des eingesetzten Endes des Aufgabeelements der Seitenwand des Haltenapfes möglichst nahekommt. Der im Aufgabeelement vorhandene Aufgabekanal ist dabei koaxial zum zylindrischen Aufgabeelement angeordnet. Auch der Auslaßkanal im Filterhalterelement und im Bereich des Auslaßstutzens ist vorzugsweise mittig angeordnet, besitzt einen zylindrischen Querschnitt und ist axial fluchtend mit dem Aufgabekanal ausgerichtet, so daß der zu filtrierenden Flüssigkeit bzw. dem Filtrat ein möglichst geringer Strömungswiderstand entgegenwirkt.

Der erfindungsgemäße Einmalfilter weist eine selbstverriegelnde Schnapp- oder Rastverbindung zwischen dem Filterhalterelement und dem Aufgabeelement auf, um das Aufgabeelement in dem Haltenapf des Filterhalterelements derart zu fixieren, daß das filterhalterelementseitige freie Ende des Aufgabeelements bzw. die Stanzlippe und/oder der Dichtwulst, sofern vorhanden, gegen das Filter und letzteren gegen den Boden des Haltenapfes drücken, um es ortsfest zu halten.

Diese Verbindung besteht aus einer in der Seitenwand des Haltenapfes radial umlaufenden Verriegelungsnut, in die ein auf der Außenwand des Aufgabeelements umlaufender Verriegelungswulst einrasten bzw. einschnappen kann. Verriegelungsnut und Verriegelungswulst besitzen vorzugsweise einen einander entsprechenden, in etwa halbkreisförmigen Querschnitt.

Nach einer bevorzugten Ausführungsform besitzt das Aufgabeelement an dem zum Filterhalterelement zeigenden Ende eine sich axial erstreckende und ringförmig umlaufende Stanzlippe. Diese Stanzlippe besitzt insbesondere rechteckigen Querschnitt. Ihre radial äußere Kante, die vorzugsweise rechtwinklig ist, stellt die Schneidkante des Aufgabeelements dar. Die axial vordere Begrenzungsfläche dieser Schneidkante verläuft vorzugsweise parallel zum Boden des Haltenapfes. Dazwischen wird das eigentliche Filter eingespannt.

Nach einer weiterhin bevorzugten Ausführungsform besitzt das Aufgabeelement filterhalterelementseitig einen sich axial erstreckenden, um die Mündung des Aufgabekanals umlaufenden Dichtwulst mit insbesondere halbkreisförmigem Querschnitt. Dieser Wulst dient zum Einspannen bzw. Fixieren des eigentlichen Filters, das zwischen diesem und der ggf. vorhandenen Stanzlippe sowie dem Boden des Haltenapfes eingespannt ist.

In letzterem Fall erstrecken sich der Dichtwulst und die Stanzlippe in axialer Richtung in etwa gleich weit.

Der Innendurchmesser des von dem Dichtwulst gebildeten Ringes ist dabei derart bemessen, daß er größer ist als der Durchmesser des Auslaßkanals an der Mündung in den Haltenapf des Filterhalterelements. Gleichwohl sollte der Dichtwulst das Filter möglichst nahe am Übergang von den Boden in den Auslaßkanal auf den Boden niederdrücken und dort fixieren, um ein einwandfreies Filtrieren zu ermöglichen.

Am Übergang von dem Haltenapf in den genannten Auslaßkanal ist vorzugsweise mindestens eine trichterförmig angeordnete Einkerbung in den Boden des Filterhalterelements eingelassen, um die Abführung des Filtrats zu erleichtern. Der Durchmesser des Dichtwulstringes ist dann natürlich größer als der Durchmesser des durch die Einkerbungen gebildeten Umfangs am Übergang in den Haltenapf des Filterhalterelements.

Das Aufgabeelement und das Filterhalterelement sind vorzugsweise einstückig und bestehen aus einem Kunststoff, insbesondere einem transparenten Kunststoff. Diese beiden Teile werden vorzugsweise spritzgeformt.

Gegenstand der Erfindung ist auch ein Verfahren zum Herstellen von erfindungsgemäßen Einmalfiltern. Bei diesem Verfahren werden mehrere Aufgabeelemente in die Haltenäpfe von mehreren Filterhalterelementen eingesetzt, wobei beim Zusammenfügen der Elemente die entsprechenden Filter gleichzeitig aus einem einzigen flächenförmigen Filtermaterial ausgeschnitten werden. Es werden somit mehrere, d.h. zwei oder mehr, beispielsweise vier, sechs, acht... Einmalfilter gleichzeitig zusammengesetzt, wobei ebenfalls gleichzeitig die entsprechenden Filterstücke, d.h. das eigentliche Filterelement, aus einem Filterbogen oder aus einer Filterbahn ausgeschnitten werden.

Dieses Verfahren eignet sich insbesondere für kleine Einmalfilter der hier in Rede stehenden Art, die zum Filtrieren nur geringer Fluidvolumina eingesetzt werden. Derartige Einmalfilter sind, wie bereits ausgeführt, Produkte der Massenfertigung.

Bei diesem Verfahren bestückt man eine Halteplatte mit mehreren Filterhalterelementen und eine andere Halteplatte mit mehreren Aufgabeelementen und zwar derart, daß beim Aufeinanderzubewegen der Halteplatten die Aufgabeelemente in die dazugehörigen Filterhalterelemente eingeführt bzw. eingeschoben werden, wobei gleichzeitig die entsprechenden Filter aus einem einzigen flächenförmigen Filtermaterial ausgeschnitten werden.

Diese Halteplatten sind vorzugsweise in einer bzw. an einer Mehrstationen-Rundtaktanordnung an einem bzw. auf einem Werkstück-Rundtisch befestigt.

Vor dem Zusammenführen der beiden Platten werden diese entweder mit Aufgabeelementen oder mit Filterhalterelementen bestückt. Dann wird der Werkstück-Rundtisch gedreht, bis die Halteplatten bis zu einem Punkt gelangen, an dem sie mit geeigneten Werkzeugen derart aufeinander zubewegt werden, daß die Aufgabeelemente in die Filterhalterelemente eingeführt werden. Dabei wird zwischen die beiden aufeinander zuzubewegenden Halteplatten ein flächenförmiges Filtermaterial gehalten, aus dem die einzelnen Filter für die Einmalfilter ausgeschnitten werden. Bei diesem flächenförmigen Filtermaterial handelt es sich vorzugsweise um ein Filterband, das nach dem Ausstanzvorgang um einen geeigneten Betrag bewegt wird.

Nach der Montage von Aufgabeelementen und Filterhalterelementen werden die diese haltende Halteplattendurch Drehen des Rundtisches aus dem Bereich weggedreht, in dem die genannte Montage stattfindet. Die fertigen Einmalfilter werden dann auf geeignete Weise aus den Halteplatten entnommen.

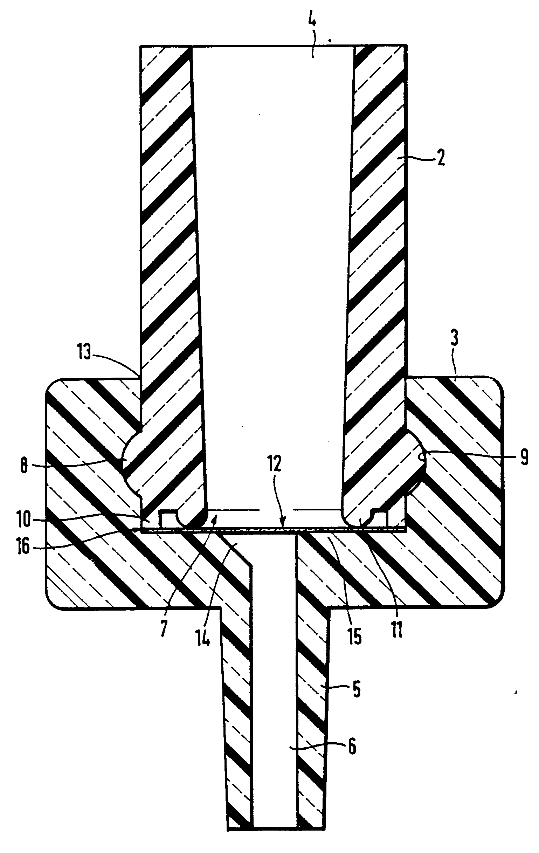

Die Erfindung wird im folgenden anhand der beiliegenden Figur näher erläutert. Diese Figur zeigt einen Längsschnitt durch einen erfindungsgemäßen Einmalfilter.

Der gezeigte Einmalfilter besteht im wesentlichen aus einem Aufgabeelement 2, einem Filterhalterelement 3 und einem zwischen diesen eingespannten Filter 12.

Das Aufgabeelement 2 stellt ein zylindrisches Röhrchen dar, in dem mittig ein beidseitig offener Aufgabekanal 4 verläuft, dessen Innendurchmesser sich zum Filter 12 hin verjüngt.

Das Aufgaberöhrchen 2 ist mit einem Ende in einen im Filterhalterelement 3 ausgenommenen zylindrischen, koaxialen Haltenapf 7 eingesetzt.

Die filterhalterelementseitige Mündung des Aufgabekanals 4 ist von einem sich in axialer Richtung erstreckenden Dichtwulst 11 eingefasst, welcher in etwa einen halbkreisförmigen Querschnitt besitzt. Die Sehne dieses Halbkreises verläuft dabei senkrecht zur Achse des Aufgaberöhrchens 2.

Das Aufgaberöhrchen besitzt ferner eine Stanzlippe 10, die an dem in den Haltenapf 7 eingesetzten Ende ringförmig umläuft und sich in axialer Richtung erstreckt. Der Außendurchmesser dieses Ringes ist der gleiche wie der Außendurchmesser des Aufgaberöhrchens 2; der Innendurchmesser ist größer als der Außendurchmesser des zuvor beschriebenen Dichtwulstes 11.

Die Stanzlippe 10 und der Dichtwulst 11 erstrecken sich dabei in etwa gleich weit in axialer Richtung und drücken auf das Filter 12, wodurch das Filtermaterial verdichtet wird und eine Abdichtung zum Filterhalterelement erzielt wird. Dieser Druck wird durch eine Schnappverbindung erzeugt, welche weiter unten erläutert ist.

Der radial äußere Rand bzw. die radial äußere Ecke der Stanzlippe 10 ist rechtwinklig und stellt eine Schneidkante 16 dar.

Die dazu korrespondierende Schneidkante 13 ist der Rand am "Eingang" des Haltenapfes 7 im Filterhalterelement 3. Auch dieser Rand bzw. diese Kante ist rechtwinklig. Beim Einsetzen des Aufgaberöhrchens 2 in den Haltenapf 7 wird durch Zusammenwirken der Schneidkante 13 und 16 ein Filter passender Größe aus einem flächenförmigen Filtermaterial ausgeschnitten bzw. ausgestanzt.

An der Außenwand des Aufgaberöhrchens 2 läuft radial ein Verriegelungswulst 8 um, der in eine korrespondierende Verriegelungsnut 9 eingerastet ist und zwar derart, daß der in axialer Richtung erforderliche Druck erzeugt wird, um mittels des Dichtwulstes 11 und auch der axialen vorderen Stirnfläche des Dichtwulstes 10 das Material des Filters 12 zu verdichten, so daß eine Abdichtung des Aufgabekanals 4 bzw. des Aufgaberöhrchens 2 gegenüber dem Filterhalterelement 3 erzielt wird.

Das Filterhalterelement 3 besitzt ebenfalls zylindrische Form und weist zentral und axial ausgerichtet einen Auslaßstutzen 5 auf, in dem koaxial ein Auslaßkanal 6 verläuft, der in den Haltenapf 7 mündet. An dieser Mündung sind in den Boden 15 des Haltenapfes 7 mehrere trichterförmig angeordnete kerbförmige Ausnehmungen eingeschnitten, um die Abführung des durch das Filter 12 gelangten Filtrats zu erleichtern.

Der Aufgabekanal 4 und der Auslaßkanal 6 sind axial fluchtend angeordnet, wobei der Durchmesser des letzteren kleiner ist als der Durchmesser des ersteren.

Der Boden 15 ist plan, verläuft senkrecht zur genannten Achse von Aufgabekanal 4 und Auslaßkanal 6 und dient u.a. auch als Stütze für das Filter 12.

Das Aufgaberöhrchen 2 und das Filterhalterelement 3 sind aus einem transparenten Kunststoff spritzgeformt.

Der Auslaßstutzen 6 verjüngt sich im übrigen leicht zum freien Ende hin.

Für den in der Figur gezeigten beispielhaften Einmalfilter der vorliegenden Erfindung seien folgende Abmessungen genannt, die rein beispielhaften Charakter haben: Durchmesser des Aufgaberöhrchens 2 = 7,0 mm; Durchmesser des Aufgabekanals 4 = 3,5 bis 4,32 mm; Durchmesser des Auslaßkanals = 1,2 mm, Durchmesser der vom Dichtwulst 11 umgrenzten, für den Filtervorgang zur Verfügung stehenden Filterscheibe = ca. 3,5 mm.

## Patentansprüche

1.  Einmalfilter aus einem Filterhalteelement (3), das einen zylindrischen Haltenapf (7), dessen Rand am Kragen als Schneidkante (13) ausgebildet ist und in dessen Seitenwand eine Verriegelungsnut (9) radial umläuft, und einen Auslaßstutzen (5) besitzt, in dem ein Auslaßkanal (6) angeordnet ist, der sich durch das Filterhalteelment (3) erstreckt und in den Boden (15) des Haltenapfes mündet, aus einem von einem Aufgabekanal (4) durchzogenen, röhrchenförmigen Aufgabelement (2), das mit einem Ende in den Haltenapf (7) dichtend eingesetzt ist, das einen radial umlaufenden Verriegelungswulst (8) besitzt, der zusammen mit der Verriegelungsnut (9) eine selbstverriegelnde Schnapp- und Rastverbindung bildet, und dessen radial äußerer, filterhalterelementseitige Rand als Schneidkante (16) ausgebildet ist, und aus einem Filter (12), das zwischen dem Boden des Haltenapfes (7) und dem eingesetzten Ende des Aufgabeelementes eingespannt und durch die selbstverriegelnde Schnapp- und Rastverbindung fixiert ist.

2.  Einmalfilter nach Anspruch 1, dadurch **gekennzeichnet,** daß der Aufgabekanal (4) und der Auslaßkanal (6) mittig und axial fluchtend angeordnet sind.

3.  Einmalfilter nach Anspruch 1 oder 2, dadurch **gekennzeichnet,** daß das Aufgabeelement (2) filterhalterelementseitig eine sich axial erstreckende, ringförmig umlaufende Stanzlippe (10) besitzt, deren radial äußere Kante die Schneidkante (16) darstellt und die insbesondere rechteckigen Querschnitt besitzt.

4.  Einmalfilter nach einem der vorhergehenden Ansprüche, dadurch **gekennzeichnet,** daß das Aufgabeelement (2) filterhalterelementseitig einen sich axial erstreckenden um die Mündung des Aufgabekanals (4) umlaufenden Dichtwulst (11) besitzt.

5.  Einmalfilter nach einem der vorhergehenden Ansprüche, dadurch **gekennzeichnet,** daß am Übergang vom Haltenapf (7) in den Auslaßkanal (6) mindestens eine trichterförmig angeordnete Einkerbung (14) in den Boden (15) des Filterhalterelements (3) eingeschnitten ist.

6.  Einmalfilter nach einem der vorhergehenden Ansprüche, dadurch **gekennzeichnet,** daß das Aufgabeelement und das Filterhalterelement (3) jeweils einstückig sind und aus einem transparenten Kunststoff bestehen und insbesondere spritzgeformt sind.

7.  Verfahren zur Herstellung von Einmalfiltern gemäß einem der Ansprüche 1 bis 6, dadurch **gekennzeichnet,** daß eine Halteplatte mit mehreren Filterelementen und eine weitere Halteplatte mit mehreren Aufgabeelementen bestückt werden und nach dieser Bestückung derart, unter Zwischenlage eines einstückigen, die gesamte Halteplatte überdeckenden flächenförmigen Filtermaterials so aufeinander zubewegt werden, daß die Aufgabeelemente in die dazugehörigen Filterelemente eingeschoben werden und dabei das ausgeschnittene Filter auf den Boden des Haltenapfes des Filterhalterelementes befördert wird.

## Claims

1.  A disposable filter unit consisting of a filter fixing member (3) comprising a cylindrical socket-type recess (7), the edge of which is formed as a knife-type cutting edge (13) and in the side wall of which a locking groove-type recess (9) is formed circularly enclosing, and an outlet pipe (5) inside which an outlet channel (6) is arranged extending through the filter fixing member (3) and leading to the ground (15) of the socket-type recess, a tube-type feed member (2) passed through by a feed channel (4), which feed member is inserted sealingly with its front end into the socket-type recess (7), which comprises a locking toric projection (8) radially enclosing, which toric projection establishes in combination with the locking groove-type recess (9) a self-locking snap-on device, and the radially outer edge of which facing towards the filter fixing member is formed as a knife-type cutting edge (16), and a filter element (12) which is clamped between the ground of the socket-type recess (7) and the inserted front end of the feed member and which is fixed by means of the self-locking snap-on device.

2.  A disposable filter unit according to claim 1, **characterized** in that the feed channel (4) and the outlet channel (6) are arranged centrally and in true alignment.

3. A disposable filter unit according to claims 1 or 2,
**characterized** in that
the feed member (2) comprises at its front side facing the filter fixing member an axially extending circularly-closed ring-type punching lip (10) in particular comprising a rectangular cross-section, the radially outward edge of which ring-type punching lip (10) constituting the knife-type cutting edge (16).

4. A disposable filter unit according to one of the previous claims,
**characterized** by
an axially extending toric projection (11) serving for sealing at the front side of the feed member (2) facing the filter fixing member (3) enclosing circularly the opening of the feed channel (4).

5. A disposable filter unit according to one of the previous claims,
**characterized** in that
at least one funnel-type arranged notch-type recess (14) is cut into the ground (15) of the filter fixing member (3) in the transition area from the socket-type recess (7) to the outlet channel (6).

6. A disposable filter unit according to one of the previous claims,
**characterized** in that
the feed member and the filter fixing member (3) are formed in one part each, that they are formed in particular by injection molding and that they are made of transparent plastics.

7. A method for producing a disposable filter unit according to one of the claims 1 to 6
**characterized** in
that a mounting plate is supplied with a plurality of filter elements and a further mounting plate is supplied with a plurality of feed members and that afterwards both mounting plates are approached to each other while putting in between a one-part sheet-type filter material covering the whole mounting plate, such that the feed members are inserted into the respective filter elements whereby the filter cut to size is moved to the ground of the socket-type recess of the filter fixing member.

**Revendications**

1. Filtre à jeter, composé d'un élément porte-filtre (3), lui-même constitué d'un godet-support (7) dont le bord du col est réalisé sous la forme d'une arête coupante (13), et dans la paroi latérale duquel une rainure de verrouillage (9) est tracée radialement suivant la périphérie, et d'une tubulure d'évacuation (5) dans laquelle est disposé un canal d'évacuation (6) traversant l'élément porte-filtre (3) et débouchant dans le fond (15) du godet-support (7), et composé d'un élément de réception (2) en forme de tube, traversé par un canal de réception (4), qui, à une extrémité, est emboîté dans le godet-support (7), en faisant étanchéité, qui possède un bourrelet de verrouillage (8) disposé radialement sur la périphérie et formant avec la rainure de verrouillage (9) une liaison à déclic et à blocage se verrouillant automatiquement, et dont le bord radial extérieur, situé du côté de l'élément porte-filtre (3) est réalisé sous la forme d'une arête coupante (16),
et composé d'un filtre (12), qui est tendu entre le fond du godet-support (7) et l'extrémité emboîtée de l'élément de réception, et qui est fixé par la liaison à déclic et à blocage se verrouillant automatiquement.

2. Filtre à jeter suivant la revendication 1, caractérisé en ce que le canal de réception (4) et le canal d'évacuation (6) sont disposés au centre et dirigés suivant l'axe.

3. Filtre à jeter suivant la revendication 1 ou la revendication 2, caractérisé en ce que l'élément de réception (2) possède, du côté de l'élément porte-filtre, une lèvre de poinçonnement (10), de direction axiale, disposée circulairement en formant bague, dont l'arête, extérieure radialement, constitue l'arête coupante (16) et possède, en particulier une section rectangulaire.

4. Filtre à jeter suivant l'une quelconque des revendications précédentes, caractérisé en ce que l'élément de réception (2) possède, du côté de l'élément porte-filtre, un bourrelet d'étanchéité (11) entourant l'embouchure du canal de réception (4) et disposé axialement.

5. Filtre à jeter suivant l'une quelconque des revendications précédentes, caractérisé en ce qu'à la transition entre le godet-support (7) et le canal d'évacuation (6), au moins une encoche (14), en forme d'entonnoir, est entaillée dans le fond (15) de l'élément porte-filtre (3).

6. Filtre à jeter suivant l'une quelconque des revendications précédentes, caractérisé en ce que l'élément de réception (2) et l'élément porte-filtre (3) sont chacun en une seule pièce et sont constitués d'une matière plastique transparente, et sont, en particulier, moulés par injection.

7. Procédé pour la fabrication de filtres à jeter suivant l'une quelconque des revendications 1 à 6, caractérisé en ce qu'une plaque support est garnie de plusieurs éléments *porte-filtres et en ce qu'une autre plaque support est garnie de plusieurs éléments de réception, et en ce qu'après ce garnissage, après intercalation d'un matériau de filtration de forme plate, en une seule pièce et recouvrant toute la plaque support, elles sont rassemblées et placées les unes sur les autres de telle façon que les éléments de réception soient emboîtés dans les éléments de filtre correspondants et en ce qu'alors le filtre, découpé, soit placé sur le fond du godet support de l'élément porte-filtre.